(19) Europäisches Patentamt
European Patent Office
Office européen des brevets

(11) **EP 2 375 226 B1**

(12) **EUROPÄISCHE PATENTSCHRIFT**

(45) Veröffentlichungstag und Bekanntmachung des Hinweises auf die Patenterteilung:
**12.02.2014 Patentblatt 2014/07**

(51) Int Cl.:
***G01G 11/08*** *(2006.01)*

(21) Anmeldenummer: **10159668.2**

(22) Anmeldetag: **12.04.2010**

(54) **Vorrichtung zur gravimetrischen Dosierung von Schüttgütern**

Device for gravimetric metering of bulk goods

Dispositif de dosage gravimétrique de marchandises en vrac

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**12.10.2011 Patentblatt 2011/41**

(73) Patentinhaber: **Di Matteo Förderanlagen GmbH & Co. KG**
**59269 Beckum (DE)**

(72) Erfinder: **Di Matteo, Luigi**
**59269 Beckum (DE)**

(74) Vertreter: **Dantz, Jan Henning et al**
**Loesenbeck - Specht - Dantz**
**Patent- und Rechtsanwälte**
**Am Zwinger 2**
**33602 Bielefeld (DE)**

(56) Entgegenhaltungen:
**US-A- 3 889 848    US-A- 5 184 754**
**US-A- 5 423 456**

**Beschreibung**

Die Erfindung betrifft eine gravimetrische Dosiervorrichtung für Schüttgüter, ins besondere von Ersatzbrennstoffen, bei der das Schüttgut aus einem Materialbunker abziehbar ist, aufweisend eine mit einer Dosierschnecke ausgestattete Dosierstrecke und eine nachgeschaltete Wiegestrecke, wobei die Dosierschnecke in einem einen Zuführschacht aufweisenden Gehäuse rotierend antreibbar angeordnet ist, und die Wiegestrecke ein weiteres Gehäuse aufweist.

Die erfindungsgemäße Vorrichtung ist vor allen Dingen im industriellen Maßstab zur gravimetrischen Dosierung sowohl von konventionellen Schüttgütern wie z.B. Granulate, Pulver und dergleichen als auch für Schüttgüter, die sich der konventionellen schüttguttechnischen Beurteilung, Charakterisierung und Handhabung entziehen, wie beispielsweise Ersatzbrennstoffe anwendbar. Ersatzbrennstoffe fallen im industriellen Bereich und im Haushalt an und sind z.B. Holzschnitzel, Kunststoffabfälle und dergleichen.

In der industriellen Anwendung, beispielsweise bei der Rohmehlherstellung in der Zementindustrie, der Herstellung von Mischzementen oder beim Einsatz von Ersatzbrennstoffen zur Energieerzeugung in einer Verbrennungsanlage, ist oftmals mit Hinblick auf eine gezielte Prozessführung die genaue Einstellung einer gravimetrisch zu dosierenden Schüttgutmenge von großer Bedeutung. Ersatzbrennstoffe werden in zunehmendem Maße als Sekundärbrennstoffe in Kombination mit den herkömmlichen fossilen Primärbrennstoffen bei der Verbrennung in Kraftwerken und bei der Zementproduktion eingesetzt. Sie setzen sich bevorzugt aus Industrie- und Haushaltsabfällen zusammen, die in ihren physikalischen Eigenschaften sehr unterschiedlich sind. Die Schüttguteigenschaften der Ersatzbrennstoffe weichen dabei signifikant von den Eigenschaften herkömmlicher Schüttgüter ab. Dieses betrifft in besonderem Maße die Kompressibilität und die faserige Struktur der Ersatzbrennstoffe, die oftmals Materialagglomerationen bedingen. Hinzu kommt, dass diese Materialien in vielen Fällen sehr adhäsiv sind, was die genannten Agglomerationen, aber auch Anbackungen an den Wandungen der Dosiermaschinen begünstigt. Zudem haben sie oftmals einen sehr hohen Anteil an brennbaren und toxischen Stäuben, die bei einer mechanischen Behandlung aufgewirbelt werden, sowie eine erhöhte Materialfeuchte.

Da die Ersatzbrennstoffe eine erhebliche Eigenwärme haben, kommt es zur Brüdenbildung und anschließenden Kondensation an kälteren Apparateteilen, was in Verbindung mit dem Staub zu massiven Ablagerungen führt. Diese Ablagerungen und Anbackungen müssen dann mit einem erheblichen manuellen Aufwand entfernt werden, um die Funktionsfähigkeit der Anlagenteile gewährleisten zu können. Aus diesem Grunde ist besonders der Einsatz von geschlossenen Dosiereinrichtungen technisch und wirtschaftlich von großem Vorteil. Er wird deshalb auch von den Anlagenbetreibern gefordert.

Ein weiterer Nachteil ist, und dieses hat erhebliche Auswirkungen auf die Genauigkeit der Dosiereinrichtungen, die kurzzeitig stark schwankende Schüttdichte der Ersatzbrennstoffe, auf die zeitnah reagiert werden muss.

Es ist weiterhin bekannt zur Dosierung von Schüttgütern, unter anderem auch für Ersatzbrennstoffe, sogenannte Schneckenwaagen einzusetzen. (DE 10 2007 055 566 A1, DE 201 09 074 U1). Bei diesen Dosiereinrichtungen wird eine Förderschnecke komplett, d.h. mit dem Antrieb und dem zu verwiegenden Materialinhalt, verwogen. Die gesamte Schneckenwaage stellt also die Messstrecke dar.

In Abhängigkeit von dem Wiegeergebnis und durch den Vergleich mit einem vorgegebenem Sollwert wird eine vorgeschaltete Dosiereinrichtung oder die Schneckendrehzahl gesteuert. Auf Grund der Tatsache, dass das Netto / Brutto-Verhältnis gering ist, ist auch die Dosiergenauigkeit gering. Weiterhin ist, bedingt durch die Steifigkeit der Dichtungsmanschetten, die kraftmäßige Entkopplung der Wiegeschnecke von den vorgeschalteten und nachgeschalteten Anlagenteilen sehr problematisch, so dass es oftmals zu einem Kraftnebenschluß kommt, der das Messsignal verfälscht. Ein weiteres Problem stellt die Materialzuführung in die Wiegeschnecke dar. Auf Grund des sich zeitlich verändernden Materialniveaus im Vorratsbehälter vor der Wiegeschnecke wird diese über die Materialeintrittsöffnung in die Schnecke zusätzlich und unterschiedlich belastet, was zu einer Beeinflussung des Wiegeergebnisses führt. Zudem ist diese Zusatzbelastung in vielen Fällen im Zulauf zur Schneckenwaage unsymmetrisch verteilt, so dass auch eine symmetrische Lagerung der Wiegeschnecke, beispielsweise auf Messeinrichtungen oder Gelenken, direkt unter der Produktzuführung keine wesentliche Verbesserung des Wiegeergebnisses bringt. Einen wesentlichen Einfluß auf die Genauigkeit des Mess-Signales hat der Füllstand in der Schnecke. Die Wiegegenauigkeit der Schneckenwaagen liegt oftmals nur bei 15%. Sie ist materialabhängig, aber auch durch die o.g. Faktoren bedingt, die auf das Messverfahren zurückzuführen sind.

Die US 5,184,754 offenbart eine Fördervorrichtung für pulverförmiges Material, bei dem das Material von einem Einfülltrichter durch eine Förderschnecke zu einer Wiegevorrichtung gefördert wird. Die Wiegevorrichtung umfasst eine Messeinrichtung, die das Gewicht eines Gehäuse erfasst, durch welches das Material gefördert wird.

Ferner offenbart die US 5,423,456 eine Vorrichtung zum Messen eines durch Schnecken kontinuierlich geförderten Materials. Hierfür wird das Material zunächst durch eine ober Förderstrecke geleitete, bevor das Material herabfällt und durch eine Förderschnecke mit einer Wiegevorrichtung bewegt wird. Die Wiegevorrichtung ist dabei schwenkbar gelagert, damit eine Messvorrichtung eine Gewichtskraft erfassten kann.

Der Erfindung liegt die Aufgabe zu Grunde eine kontinuierlich wirkende Vorrichtung zur gravimetrischen Dosierung von Schüttgütern der eingangs beschriebenen Art, insbesondere für die Dosierung von Ersatzbrennstoffen zu entwickeln, die auch für die Dosierung von anderen faserigen, kompressiblen und adhäsiven Schüttgütern geeignet und gegenüber der Umgebung geschlossen ist, wobei die Dosiergenauigkeit. Weiterhin soll sie auf Grund ihres Wirkprinzips und eines hohen Netto:Brutto-Verhältnisses erhöht werden.

Die gestellte Aufgabe wird mit einer Vorrichtung mit den Merkmalen des Anspruches 1 gelöst.

Das Gehäuse der Wiegestrecke stützt sich in an sich bekannter Weise auf wenigstens einer Wiegezelle ab. Durch den größeren Durchmesser des Gehäuses der Wiegestrecke kann sich das Schüttgut, welches zuvor aufgrund des 100%igen Füllungsgrades in der Dosierstrecke verdichtet wurde, entspannen und somit auflockern. Dadurch werden die Reibungskräfte an der Wandung des Gehäuses der Wiegestrecke derart stark reduziert, dass die Einwirkung von Horizontalkräften auf die Messzellen zumindest verringert werden, wenn nicht vollkommen eliminiert werden. Dadurch wird die Genauigkeit des Wiegevorganges erhöht. Das Durchmesserverhältnis der Gehäuse der Wiegestrecke und der Dosierstrecke sind an die Materialeigenschaften anzupassen. Die Genauigkeit des Wiegeergebnisses ist besonders bei Ersatzbrennstoffen problematisch, aufgrund der Kompressibilität des Materials.

Die Gehäuse können, mit Ausnahme des Einführschachtes der Dosierstrecke, geschlossen sein. Sie können darüber hinaus zylindrisch ausgebildet oder trogförmig gestaltet sein.

In weiterer Ausgestaltung ist vorgesehen, dass das Verhältnis des Durchmessers des Gehäuses der Dosierstrecke zum Durchmesser des Gehäuses der Wiegestrecke größer als 1,0:1,05 ist. Dieses Verhältnis sollte jedoch bevorzugt so sein, dass das Schüttgut im Bereich der zweiten Förderschnecke maximal bis zur Mittellängsachse ansteigt, vorzugsweise jedoch darunter liegt. Zur Charakterisierung des Durchmessers der Wiegestrecke wird ein äquivalenter Durchmesser verwendet, der nach folgender Formel errechnet werden kann.

$$D_{\ddot{a}} = 4 \times \frac{F}{U}$$

In dieser Formel ist $D_{\ddot{a}}$ der äquivalente Durchmesser, F die Querschnittsfläche der Wiegestrecke und U der Umfang der Wiegestrecke.

Der Durchmesser der Dosierstrecke, sowohl für konventionelle als auch für nicht konventionelle Schüttgüter der eingangs beschriebenen Art ist dabei kleiner als der äquivalente Durchmesser der Wiegestrecke. Dadurch werden keine horizontalen Kräfte an den Wägezellen der Wiegestrecke erzeugt, da die Gleitreibung zwischen dem Material und dem Gehäuse bzw. dem Trog zumindest vermindert wird, möglichst jedoch gegen den Wert Null geht. Zur Erzielung einer hohen Dosiergenauigkeit muss der Füllungsgrad der ersten Förderschnecke 100 % oder annähernd 100 % betragen. Der Füllungsgrad der zweiten Förderschnecke der Wiegestrecke beträgt maximal 50 %.

In der erfindungsgemäßen Vorrichtung ist vorgesehen, dass die der Dosierstrecke nachgeschaltete Wiegestrecke mit einer Wiegeschnecke ausgestattet ist, deren Durchmesser ebenfalls größer ist als der der Dosierstrecke. Diese Wiegeschnecke ist besonders vorteilhaft, wenn es sich bei den aufzugebenden Materialien um kompressible Materialien handelt, die beim ausschließlichen Transport mittels der Dosierschnecke sehr stark verdichtet würden.

Eine konstruktiv einfache Lösung wird erreicht, wenn die Dosierschnecke und die Wiegeschnecke auf einer gemeinsamen, durchgehenden sowie rotierend antreibbaren Welle festgesetzt sind. Dadurch wird nicht nur der Antrieb in einfachster Weise möglich, sondern die Drehzahlen stimmen korrekt überein.

Darüber hinaus wird erreicht, dass die Dosierschnecke und die Wiegeschnecke durch einen einzigen, regelbaren Antrieb angetrieben werden können, so dass ein separater Antrieb für die Wiegeschnecke entfällt. Die ansonsten übliche zweifache Lagerung zwischen dem Antrieb und der Dosierstrecke entfällt. Die dadurch bedingte fliegende Lagerung der Wellen beeinträchtigt wiederum das Wiegeergebnis negativ. Auch ist diese Lagerung konstruktiv sehr aufwendig, sie ist auch aufgrund der auftretenden Vibrationen problematisch. Außerdem kann es zu Materialverdichtungen beim Übergang von der Förderschnecke zur Wiegeschnecke kommen.

Es ist ferner noch vorgesehen, dass der Füllungsgrad des Gehäuses der Dosierschnecke 100 % oder annähernd 100 % beträgt.

Durch diesen Füllungsgrad wird die Dosiergenauigkeit der Dosierstrecke in signifikantem Umfang erhöht. Erst bei einer annähernd vollständigen Füllung der Dosierstrecke besteht mathematisch ein linearer Zusammenhang zwischen der dosierten Schüttgutmenge und der Schneckendrehzahl. Erst damit ist eine Durchsatzregelung mit der angestrebten Genauigkeit möglich.

Bei der erfindungsgemäßen Lösung ist vorgesehen, dass der Füllungsgrad des die Wiegeschnecke tragenden Gehäuses maximal 50 % beträgt. Bei diesem Füllungsgrad der Wiegestrecke mit der Wiegeschnecke von über 50 % kommt es zu dem Phänomen, dass Schüttgut über die Schneckenwelle der Wiegeschnecke geworfen und entgegen der Schüttgutbewegung transportiert wird. Damit wird durch das somit undefinierte Verweilzeitverhalten des Schüttgutes in der Wiegestrecke eine Materialbewegung vorgetäuscht, die das Messergebnis der Messzellen negativ beeinflusst.

Aufgrund der unterschiedlichen Durchmesser der ersten und der zweiten Förderschnecke können die Steigungen der Schneckenwendeln unterschiedlich sein. In bevorzugter Ausführung ist jedoch vorgesehen, dass diese Steigungen gleich sind. Damit es nicht zu Agglomerationen kommt, ist vorgesehen, dass die Außendurchmesser der Schneckenwendeln der ersten Förderschnecke maximal 25 mm kleiner sind als der Innendurchmesser des zugehörigen Gehäuses bzw. des Troges.

Bei relativ schweren Schüttgütern können die Steigungen der Schneckenwendeln in der Dosierstrecke und der Wiegestrecke gleich sein. Bei relativ leichten Schüttgütern kann es erforderlich sein, dass die Schneckenwendeln in der Wiegestrecke kleiner ausgeführt sind. Dadurch wird die in der Dosierstrecke befindliche Schüttgutmenge vergrößert und somit das Mess-Signal an den Messzellen verstärkt, wodurch die Messgenauigkeit vergrößert wird.

Damit das Schüttgut gleichmäßig aus dem Gehäuse bzw. dem Trog der zweiten Förderschnecke kontinuierlich abgeführt wird, ist vorgesehen, dass das auslaufseitige Ende der zweiten Förderschnecke unmittelbar vor dem Auslaufstutzen endet.

In weiterer Ausgestaltung ist noch vorgesehen, dass der Außendurchmesser der Schneckenwendeln der Dosierschnecke maximal 25 mm kleiner sind als der Innendurchmesser des zugehörigen Gehäuses.

Bei der Verwiegung mittels der Wiegestrecke kommt das Mess-Signal der Messzellen dadurch zustande, dass sich die Wiegestrecke infolge des Schüttgutes, unter

Vermeidung eines Kraftnebenschlusses, absenkt. Dadurch werden die Messzellen belastet und somit ein Mess-Signal erzeugt. Um den Einfluss der starren Wiegeschnecke auf die Messgenauigkeit der Wiegestrecke zu eliminieren, ist es erforderlich einen ausreichenden Abstand zwischen der Förderschnecke der Dosierstrecke und dem Gehäuse der Wiegestrecke abzusichern. Ferner ist es im Sinne der Messgenauigkeit erforderlich, bei Schüttgütern, die zur Agglomeration neigen, dass diese frei aus der Wiegestrecke in den Auslaufstutzen fallen können.

Zur Ermittlung des Gewichtes des Schüttgutes in der Wiegestrecke ist vorgesehen, dass mindestens eine Messzelle unterhalb des Gehäuses bzw. des Troges montiert ist, auf der bzw. auf denen sich das Gehäuse abstützt und dass die Drehzahlen der ersten und der zweiten Förderschnecke in Abhängigkeit vom Messergebnis regelbar sind. Dies erfolgt durch Einspeisung des Messergebnisses der Wägezelle bzw. der Wägezellen in ein Auswertgerät bzw. einen Regler und der Antriebsmotor, vorzugsweise ein Drehstromgetriebemotor wird über einen Frequenzwandler geregelt, d.h., die Drehzahlen werden verändert. Damit das Schüttgut beim Einlauf in die Wiegestrecke gleichmäßiger verteilt wird, ist vorgesehen, dass im Einlaufbereich der zweiten Förderschnecke ein zusätzlicher Schneckenwendel vorgesehen ist.

Zur Erzeugung eines verwertbaren Mess-Signales ist es erforderlich, mindestens eine Messzelle an der Wiegestrecke zu installieren. Dieses Mess-Signal wird dann zur Regelung der Schneckendrehzahl, in Abhängigkeit von dem vorgegebenen Sollwert und dem Messwert der Wiegestreckenverwiegung verwendet.

Durch die zusätzlichen Schneckenwendel im Einlaufbereich der Wiegeschnecke wird die Materialpulsation abgebaut, die durch die Eingängigkeit der Dosierschnecke bedingt ist. Damit wird der Schüttgutstrom durch die Wiegestrecke vergleichmäßigt. Diese Maßnahme kann bei einigen Schüttgütern, wie beispielsweise Granulaten, die Mess-Signalgenauigkeit positiv beeinflussen.

Damit kein Schüttgut aus dem Gehäuse der Dosierstrecke austritt, ist vorgesehen, dass an beiden Stirnendbereichen jeweils eine Dichtung vorgesehen ist.

Bei den vorbekannten Ausführungen sind die Schnecken fliegend gelagert, d.h., in Durchflussrichtung des Materials vorn. Dadurch kann es zu Vibrationen kommen, die, wie bereits erwähnt, die Messgenauigkeit ungünstig beeinflussen. Da nunmehr die Dosierschnecke und die Wiegeschnecke auf einer gemeinsamen, durchgehenden Welle drehfest angeordnet sind, ist es möglich, dass diese Welle im Bereich zwischen dem in der Drehzahl regelbaren Antrieb und der Einlaufseite der Dosierschnecke zu einer Lagerung und auch am auslaufseitigen Ende der Wiegestrecke kommt. Dadurch werden Vibrationen ausgeschlossen.

Anhand der beiliegenden Zeichnung wird die Erfindung noch näher erläutert.

Es zeigt:

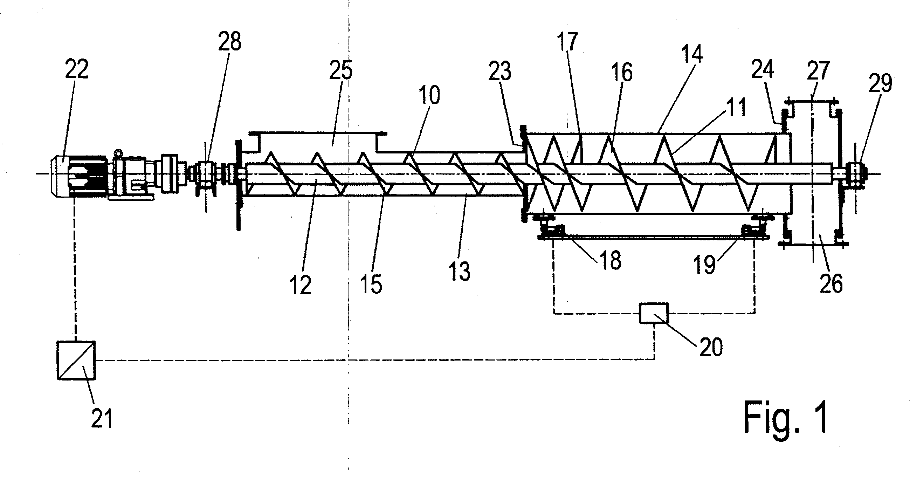

Figur 1      die erfindungsgemäße Vorrichtung, rein schematisch.

Die in der Figur 1 dargestellte Vorrichtung zur gravimetrischen Dosierung von Schüttgütern weist eine Dosierschnecke 10 und eine nachgeschaltete Wiegeschnecke 11 auf, die auf einer gemeinsamen Welle 12 drehfest aufgesetzt sind. Die Dosierschnecke 10 und die Wiegeschnecke 11 sind in einem nicht näher erläuterten Gehäuse oder einem Trog drehbar gelagert. Das Gehäuse der Dosierschnecke 10 ist durch das Bezugszeichen 13 und das Gehäuse der Wiegeschnecke 11 durch das Bezugszeichen 14 gekennzeichnet. Die Schneckenwendeln der Dosierschnecke 10 sind durch das Bezugszeichen 15, die Schneckenwendeln der Wiegeschnecke 11 durch das Bezugzeichen 16 gekennzeichnet.

Wie die Figur 1 deutlich zeigt, sind die Durchmesser der Schneckenwendeln 16 der Wiegeschnecke 11 wesentlich größer als die Durchmesser der Schneckenwendeln 15 der Dosierschnecke 10. Die durch die Dosierschnecke 10 bestimmte Wiegestrecke hat einen Füllungsgrad von 100 % oder annähernd 100 %, so dass der Füllungsgrad der durch die Wiegeschnecke 11 bestimmten Wiegestrecke deutlich darunter liegt. Das Schüttgut sollte sich maximal bis zur Drehachse der Wiegeschnecke 11 erstrecken. Die Steigungen der Schneckenwendeln 15, 16 können gleich oder unterschiedlich sein. Zur Vergleichmäßigung des Schüttgutstromes ist im Einlaufbereich der zweiten Förderschnecke 11 ein zusätzlicher Schneckenwendel 17 vorgesehen.

Das Gehäuse der Wiegeschnecke 11 bzw. der Wiegestrecke stützt sich im dargestellten Ausführungsbeispiel auf vier Messzellen 18, 19 ab. Diese Messzellen 18, 19 sind unterhalb des Gehäuses 14 in den Endbereichen vorgesehen und paarweise angeordnet. Die Messwerte werden in ein Auswertgerät 20 bzw. in einen Regler eingespeist, dort verarbeitet und in einen Frequenzwandler 21 eingespeist, wodurch die Drehzahl des die Welle 12 antreibenden Drehstromgetriebemotors 22 regelbar ist.

Wie die Figur 1 ferner zeigt, ist in den Stirnbereichen des Gehäuses 14 der Wiegestrecke jeweils eine Dichtung 23, 24 vorgesehen.

Das Gehäuse 13 für die Dosierschnecke 10 ist noch mit einem Zuführschacht 25 und das Gehäuse 14 für die Wiegeschnecke 11 mit einem Auslaufstutzen 26 versehen. Darüber hinaus ist darüber noch ein Entlüftungsstutzen 27 angeordnet.

In nicht näher dargestellter Weise ist vorgesehen, dass die die Dosierschnecke 10 und die Wiegeschnecke 11 tragende Welle 12 im Bereich zwischen dem Drehstromgetriebemotor 22 und der Dosierschnecke 10 sowie im auslaufseitigen Bereich der Wiegeschnecke 11 gelagert ist. Die Figur 1 zeigt ferner, dass die Welle 12 in zwei beabstandeten Lagern 28, 29 gelagert ist. Das Lager 28 ist zwischen dem Antriebsmotor 22 und dem Eingang der Dosierschnecke 10 und das Lager 29 ist außenseitig neben dem Auslaufstutzen 26 angeordnet.

Die nachfolgenden Maße und Mengen sind für die erfindungsgemäße Vorrichtung beispielhaft zu sehen. So können mittels dieser Vorrichtung 750 kg Ersatzbrennstoffe pro Stunde, beispielsweise Fluff verarbeitet werden. Das Gehäuse 13 der ersten Förderschnecke 10 könnte einen Durchmesser von 250 mm und eine Länge von 1000 mm aufweisen. Die Steigung der Schneckenwendeln 15 könnte 250 mm betragen, also identisch zum Innendurchmesser des Gehäuses 13 sein. Das Gehäuse 14 der zweiten Förderschnecke 11 könnte beispielsweise ca. 1470 mm lang sein und der Durchmesser könnte 430 mm betragen. Der Außendurchmesser der Schneckenwendeln 16 könnte 400 mm betragen und die Steigung könnte ebenfalls 250 mm betragen.

Die Erfindung ist nicht auf das dargestellte Ausführungsbeispiel beschränkt. Wesentlich ist, dass die Vorrichtung zwei hintereinander geschaltete Förderschnecken 10, 11 aufweist, wobei die eine Dosierstrecke 11 bestimmende Dosierschnecke einen kleineren Durchmesser hat als die nachgeschaltete, die Wiegestrecke definierte Wiegeschnecke 11.

**Patentansprüche**

1. Vorrichtung zur gravimetrischen Dosierung von Schüttgütern, insbesondere von Ersatzbrennstoffen, bei der das Schüttgut aus einem Materialbunker abziehbar ist, aufweisend eine mit einer Dosierschnecke (10) ausgestattete Dosierstrecke und eine nachgeschaltete Wiegestrecke, die mit einer Wiegeschnecke (11) ausgestattet ist, wobei die Dosierschnecke (10) in einem einen Zuführschacht (25) aufweisenden Gehäuse (13) angeordnet ist, und die Wiegestrecke ein weiteres Gehäuse (14) aufweist, wobei der Durchmesser des Gehäuses (14) der Wiegestrecke größer ist als der Durchmesser des Gehäuses (13) der Dosierstrecke, **dadurch gekennzeichnet, dass** die Mittellängsachsen der beiden Gehäuse (14, 13) zueinander fluchten und der Füllungsgrad des die Wiegeschnecke (11) tragenden Gehäuses (14) maximal 50 % beträgt und der Füllungsgrad des Gehäuses (13) der Dosierschnecke (10) 100 % oder annähernd 100 % beträgt, wobei die Durchmesser der Schneckenwendeln (16) der Wiegeschnecke (11) wesentlich größer als die Durchmesser der Schneckenwendeln (15) der Dosierschnecke (10) sind.

2. Vorrichtung nach Anspruch 1, **dadurch gekennzeichnet, dass** die Dosierschnecke (10) und die Wiegeschnecke (11) auf einer gemeinsamen, durchgehenden sowie rotierend antreibbaren Welle (12) festgesetzt sind.

3. Vorrichtung nach Anspruch 1 oder 2, **dadurch gekennzeichnet, dass** die Steigungen der Schneckenwendeln (15, 16) der Dosierschnecke (10) und der Wiegeschnecke (11) gleich oder unterschiedlich sind.

4. Vorrichtung nach einem oder mehreren der vorstehenden Ansprüche, **dadurch gekennzeichnet, dass** die Außendurchmesser der Schneckenwendeln (15) der Dosierschnecke (10) maximal 25 mm kleiner sind als der Innendurchmesser des zugehörigen Gehäuses (13).

5. Vorrichtung nach einem oder mehreren der vorstehenden Ansprüche, **dadurch gekennzeichnet, dass** das auslaufseitige Ende der Wiegeschnecke (11) unmittelbar vor einem Auslaufstutzen (26) endet.

6. Vorrichtung nach einem oder mehreren der vorstehenden Ansprüche, **dadurch gekennzeichnet, dass** der Wiegestrecke der Vorrichtung zur Ermittlung des Materialgewichtes mindestens eine Messzelle zugeordnet ist, auf denen sich das Gehäuse (14) abstützt, und dass die Drehzahlen der ersten und der zweiten Förderschnecke (10, 11) in Abhängigkeit vom Messergebnis regelbar sind.

7. Vorrichtung nach einem oder mehreren der vorstehenden Ansprüche, **dadurch gekennzeichnet, dass** die Wiegeschnecke (11) einlaufseitig mindestens einen zusätzlichen Schneckenwendel (17) aufweist, und dass im einlauf- und auslaufseitigen Bereich des Gehäuses (14) der Wiegeschnecke (11) Dichtungen (23, 24) vorgesehen sind.

8. Vorrichtung nach einem oder mehreren der vorstehenden Ansprüche, **dadurch gekennzeichnet, dass** die die Dosierschnecke (10) und die Wiegeschnecke (11) tragende Welle (12) im Bereich zwischen dem regelbaren Antriebsmotor (22) und der Einlaufseite der Dosierschnecke (10) sowie im gegenüberliegenden Endbereich, vorzugsweise angrenzend an den Auslaufstutzen (26) gelagert ist.

## Claims

1. Device for gravimetric metering of bulk goods, in particular of alternative fuels, in which the bulk goods can be drawn off from a material bunker, having a metering section equipped with a metering worm (10) and a following weighing section which is equipped with a weighing worm (11), the metering worm (10) being arranged in a housing (13) having a feed shaft (25), and the weighing section having a further housing (14), the diameter of the housing (14) of the weighing section being larger than the diameter of the housing (13) of the metering section, **characterized in that** the longitudinal mid-axes of the two housings (14, 13) are aligned with one another, and the degree of filling of the housing (14) carrying the weighing worm (11) amounts to at most 50% and the degree of filling of the housing (13) of the metering worm (10) amounts to 100% or approximately 100%, the diameters of the worm helices (16) of the weighing worm (11) being substantially larger than the diameters of the worm helices (15) of the metering worm (10).

2. Device according to Claim 1, **characterized in that** the metering worm (10) and the weighing worm (11) are secured to a common continuous shaft (12) capable of being driven in rotation.

3. Device according to Claim 1 or 2, **characterized in that** the pitches of the worm helices (15, 16) of the metering worm (10) and of the weighing worm (11) are identical or different.

4. Device according to one or more of the preceding claims, **characterized in that** the outside diameters of the worm helices (15) of the metering worm (10) are at most 25 mm smaller than the inside diameter of the associated housing (13).

5. Device according to one or more of the preceding claims, **characterized in that** the outflow-side end of the weighing worm (11) terminates directly in front of an outflow connection piece (26).

6. Device according to one or more of the preceding claims, **characterized in that**, in order to determine the material weight, the weighing section of the device is assigned at least one measuring cell on which the housing (14) is supported, and **in that** the rotational speeds of the first and of the second conveying worm (10, 11) can be regulated as a function of the measurement result.

7. Device according to one or more of the preceding claims, **characterized in that** the weighing worm (11) has on the inflow side at least one additional worm helix (17), and **in that** seals (23, 24) are provided in the inflow-side and outflow-side region of the housing (14) of the weighing worm (11).

8. Device according to one or more of the preceding claims, **characterized in that** the shaft (12) carrying the metering worm (10) and the weighing worm (11) is mounted in the region between the regulatable drive motor (22) and the inflow side of the metering worm (10) and also in the opposite end region, preferably adjacently to the outflow connection piece (26).

## Revendications

1. Dispositif de dosage gravimétrique de produits en vrac en particulier de combustibles de réserve selon lequel les produits en vrac peuvent être soutirés d'un réservoir, comportant une ligne de dosage équipée d'une vis de dosage (10) et d'une ligne de pesage située en aval de celle-ci et équipée d'une vis de pesage (11), la vis de dosage (10) étant montée dans un boitier (13) comportant une trémie d'alimentation (25) et la ligne de pesage comportant un autre boitier (14), le diamètre du boitier (14) de la ligne de pesage étant supérieur au diamètre du boitier (13) de la ligne de dosage,
**caractérisé en ce que**
les axes longitudinaux médians des deux boitiers (13, 14) sont alignés, et le taux de remplissage du boitier (14) portant la vis de pesage (11) est au maximum de 50 % tandis que le taux de remplissage du boitier (13) de la vis de dosage (10) est de 100 % ou d'environ 100 %, le diamètre des hélices (16) de la vis de pesage (11) étant essentiellement supérieur au diamètre des hélices (15) de la vis de dosage (10).

2. Dispositif conforme à la revendication 1,
**caractérisé en ce que**
la vis de dosage (10) et la vis de pesage (11) sont fixées sur un arbre commun continu (12) pouvant être entrainé en rotation.

3. Dispositif conforme à la revendication 1 ou 2,
   **caractérisé en ce que**
   les pas des hélices (15, 16) de la vis de dosage (10) et de la vis de pesage (11) sont égaux ou différents.

4. Dispositif conforme à au moins l'une des revendications précédentes,
   **caractérisé en ce que**
   le diamètre externe des hélices (15) de la vis de dosage (10) est au maximum inférieur de 25 mm au diamètre interne du boitier associé (13).

5. Dispositif conforme à au moins l'une des revendications précédentes,
   **caractérisé en ce que**
   l'extrémité située côté sortie de la vis de pesage (11) se termine immédiatement avant une tubulure de décharge (26).

6. Dispositif conforme à au moins l'une des revendications précédentes,
   **caractérisé en ce qu'**
   à la ligne de pesage du dispositif est associée pour détecter le poids du matériau, au moins une cellule de mesure sur laquelle s'appuie le boitier (14), et les vitesses de rotation de la première et de la seconde vis de transport (10, 11) peuvent être réglées en fonction du résultat de mesure.

7. Dispositif conforme à au moins l'une des revendications précédentes,
   **caractérisé en ce que**
   la vis de pesage (11) comporte, côté entrée, au moins une hélice supplémentaire (17), et, dans la zone située côté entrée et côté sortie du boitier (14) de la vis de pesage (11) il est prévu des joints d'étanchéité (23, 24).

8. Dispositif conforme à au moins l'une des revendications précédentes,
   **caractérisé en ce que**
   l'arbre (12) portant la vis de dosage (10) et la vis de pesage (11) est logé sur paliers dans la zone située entre le moteur d'entrainement réglable (22) et le côté entrée de la vis de dosage (10) ainsi que dans la zone d'extrémité opposée, de préférence au voisinage de la tubulure d'évacuation (26).

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007055566 A1
- DE 20109074 U1
- US 5184754 A
- US 5423456 A